(19) Europäisches Patentamt
European Patent Office
Office européen des brevets

(11) **EP 4 726 611 A1**

(12) **EUROPEAN PATENT APPLICATION**

(43) Date of publication:
**15.04.2026 Bulletin 2026/16**

(21) Application number: **24206425.1**

(22) Date of filing: **14.10.2024**

(51) International Patent Classification (IPC):
**G06N 10/20** $^{(2022.01)}$  **G06N 10/60** $^{(2022.01)}$
**G06N 10/80** $^{(2022.01)}$

(52) Cooperative Patent Classification (CPC):
**G06N 10/20; G06N 10/60; G06N 10/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Algorithmiq Oy**
**00160 Helsinki (FI)**

(72) Inventor: **García-Pérez, Guillermo**
**00160 Helsinki (FI)**

(74) Representative: **Leinweber & Zimmermann Patentanwalts-PartG mbB**
**European Patent Attorneys**
**Viktualienmarkt 8**
**80331 München (DE)**

(54) **METHOD, APPARATUS AND COMPUTER PROGRAM FOR COMPUTATIONAL APPROXIMATION OF AN EXPECTATION VALUE IN A FINITE DIMENSIONAL QUANTUM SYSTEM**

(57) A method of computational approximation of an expectation value in a finite dimensional quantum system described in a basis of linearly and algebraically independent basis operators, a set of monomials composed of the basis operators forming a basis of an operator space of linear operators associated with a Hilbert space of the quantum system, the method comprising:

receiving a representation of an initial state operator $\rho_{ini}$ of the quantum system, a sequence

$\mathcal{C} = \mathcal{C}_L \circ \ldots \circ \mathcal{C}_2 \circ \mathcal{C}_1$ of L quantum operations $\mathcal{C}_i$ represented in terms of the monomials and an operator $O$ represented as a linear combination of the monomials;

calculating for each index i of the quantum operations $\mathcal{C}_i$ of the sequence, beginning with a last index i=L down to a first index i=1, an action of an adjoint quantum operation

$\mathcal{C}_i^\dagger$ of the quantum operation $\mathcal{C}_i$ on an input operator

$O_i$, $\mathcal{C}_i^\dagger(O_i)$, wherein the first input operator $O_L$ is the operator $O$, and for i=L-1 down to i=1 the input operator is the calculated result of the immediately preceding step after truncation of all monomial terms having a length greater than a predetermined first threshold length;

obtaining the approximation of the expectation value of the operator $O$ by determining a trace of a product of a final operator $O_0$ which is the calculation result of the last step after truncation of all monomial terms having a length greater than the predetermined first threshold length and the initial state operator.

Fig. 1

**Description**

I. <u>INTRODUCTION</u>

The present invention is related to a method, an apparatus and a computer program for computational approximation of an expectation value in a finite dimensional quantum system, in particular in the field of quantum chemistry.

Quantum computers have the potential to solve computational problems that are intractable on a classical computer because they leverage the exponential growth of the quantum mechanical state space, allowing them to process and analyze vast amounts of data in a quantum superposition. Many fields, including quantum chemistry, would benefit from quantum computers. For instance, solving for the ground state of molecular Hamiltonians or for the dynamics of a molecular system is classically hard, while a quantum computer would not be limited by the amount of entanglement in the state, at least in principle. Broadly, the framework to tackle these problems consists of the following steps:

1. Identify the chemical quantity of interest, e.g., the Hamiltonian or some other operator, and find its classical representation.

2. Define the Fermionic circuit, i.e., the sequence of Fermionic operations that result in the desired state. This circuit can be an ansatz, with free parameters to be adjusted variationally in order to find the ground state of the system, or a circuit approximating the dynamics of the system under a Hamiltonian.

3. Map the Fermionic problem to qubit space using a fermion-to-qubit mapping, e.g., such as introduced in Refs. [1, 2], the entire contents of each are incorporated herein by reference. This transformation maps the Fermionic operator and circuit to a multi-qubit operator and circuit, respectively, ready to be executed and measured on quantum hardware.

4. Execute the multi-qubit circuit on hardware and measure the quantity of interest.

5. If any parameters in the circuit are to be adjusted, e.g., through energy minimization, alter parameter values according to some optimization routine and go back to step 3.

This process is designed so as to result in the target state being prepared by the circuit. However, the process relies on repeated circuit executions on hardware, which can be prohibitively costly and time consuming in practical scenarios.

A potential solution to these cost and time constraints is the development of novel classical methods capable of simulating circuits. Many of these methods operate in the Heisenberg picture, where the operator to be evaluated is propagated backwards through the circuit, as opposed to the initial state being propagated forwards.

A notable example is the method introduced in Ref. [3], which exploits the proximity of the circuit to so-called Clifford circuits, which are classically simulatable, to approximate near-Clifford circuits with great accuracy and efficiency; the method was proposed in response to the largest quantum simulation on a digital device to date, see Ref. [4], relevant portions of each reference is herein incorporated by reference. Another example is the algorithm studied in Ref. [5], in which as the multi-qubit operator is propagated along the unitary circuit, its high-Pauli-weight terms are disregarded, with little detrimental effect on the final result for a vast class of circuits, which relevant portions are also incorporated herein by reference.

While these methods have proven to be remarkably powerful within their realm of applicability, their usefulness for chemistry circuits is not obvious. Typical chemical circuits are not expected to be near-Clifford in general, which rules out the method in Ref. [3]. The method in Ref. [5] relies on the low Pauli weight of the operator of interest. However, chemical operators, when mapped to qubit space-the space where said algorithm operates-have high Pauli weight; in fact, said Pauli weight is lower-bounded, see Ref. [1], unless additional qubits are introduced. It would be in theory possible to trade Pauli locality with additional qubits in the fermion-to-qubit mapping process in order to then use method [5], but the potential of this prospect is unclear: the resulting qubit overhead may be prohibitive or the lowest achievable locality may be too high, or the resulting circuit may not fall within the class the algorithm in Ref. [5] is valid for.

Due to these problems in the prior art, it is therefore an object of the present invention to provide a method an apparatus and a computer program for computational approximation of an expectation value in a quantum system, in particular in the field of quantum chemistry.

## II. SUMMARY OF THE INVENTION

According to a first aspect of the present invention, there is provided a method for computational approximation of an expectation value in a finite dimensional quantum system described in a basis of linearly and algebraically independent basis operators, a set of monomials composed of the basis operators forming a basis of an operator space of linear operators associated with a Hilbert space of the quantum system, the method comprising:

receiving a representation of an initial state operator $\rho_{ini}$ of the quantum system, a sequence $\mathcal{C} = \mathcal{C}_L \circ ... \circ \mathcal{C}_2 \circ \mathcal{C}_1$ of L quantum operations $\mathcal{C}_i$ represented in terms of the monomials and an operator 0 represented as a linear combination of the monomials;

calculating for each index i of the quantum operations $\mathcal{C}_i$ of the sequence, beginning with a last index i=L down to a first index i=1, an action of an adjoint quantum operation $\mathcal{C}_i^\dagger$ of the quantum operation $\mathcal{C}_i$ on an input operator $O_i$, $\mathcal{C}_i^\dagger(O_i)$, wherein the first input operator $O_L$ is the operator $O$, and for i=L-1 down to i=1 the input operator is the calculated result of the immediately preceding step after truncation of all monomial terms having a length greater than a predetermined first threshold length;

obtaining the approximation of the expectation value of the operator 0 by determining a trace of a product of a final operator $O_0$ which is the calculation result of the last step after truncation of all monomial terms having a length greater than the predetermined first threshold length and the initial state operator.

Due to the truncation of the monomials in each of the calculation steps, the method according to the present invention allows for an approximate calculation of the expectation value $\langle O \rangle = \text{tr}[\mathcal{C}(\rho_{ini})O]$ of the operator $O$ on a classical computer in time and with memory scaling polynomially in the number of basis operators. In particular, the computational complexity of the estimation is reduced while limiting the approximation error to a predetermined threshold. The method according to the present invention may allow to solve computational problems on a classical computer that have a complexity which previously required an implementation on a quantum computer. In this way, quantum resources may be saved.

The method may in particular be carried out by a classical computer. In particular, the receiving of the representation of the initial state operator, the sequence of quantum operations and the operator $O$, the calculating of the action of the adjoint operator on the input operators and the determining of the trace of the product of the final operator $O_0$ and the initial state operator may be carried out by a classical computer in one example.

A classical computer processes information in the form of digital bits (also called "0" and "1"). A quantum computer processes information in the form of quantum bits, also known as qubits. A quantum computer performs computation by use of the laws of quantum mechanics. In particular, due to the quantum mechanical properties of superposition and entanglement, a quantum computer may solve computational problems faster than any classical computer.

A finite dimensional quantum system may be described by B linearly and algebraically independent basis operators $\mathcal{B} = \{m_1, ..., m_B\}$. A monomial of the basis operators is an operator $M = m_1^{b_1} m_2^{b_2} ... m_B^{b_B}$ of a set $\mathcal{M} = \{m_1^{b_1} m_2^{b_2} ... m_B^{b_B} : b_i \in \{0,1\}, \forall i\}$. The set $\mathcal{M}$ of the monomials forms a basis of the space of linear operators on the Hilbert space associated with the quantum system.

The finite dimensional quantum system may be a quantum system which models a physical system of practical relevance. For example, the finite dimensional quantum system may be a Fermionic system, including molecules, materials, systems of nuclear physics, solid state systems, etc. In one example, the method may be used for modelling molecular structures. The method it not limited to Fermionic systems, though, and may be applied to model other physical systems that are not Fermionic.

The length of a monomial may be indicative of the number of basis operators in the monomial. In one embodiment, the length associated with the monomial may be equal to the number of basis operators in the monomial. In this case, one may define a length function $\mathcal{L}$ for each monomial in the set $\mathcal{M}$ of monomials by $\mathcal{L}(m_1^{b_1} m_2^{b_2} ... m_B^{b_B}) = \sum_{i=1}^{B} b_i$. Then, a set $\mathcal{M}^{[k]}$ of monomials with length less or equal than k may be defined

as $\mathcal{M}^{[k]} = \{M \in \mathcal{M} : \mathcal{L}(M) \leq k\}$ for $k \in [0, B]$.

Every quantum operation $\mathcal{C}_i$ of the sequence of quantum operations $\mathcal{C} = \mathcal{C}_L \circ \ldots \circ \mathcal{C}_2 \circ \mathcal{C}_1$ maps an input operator $O_{input}$ on the Hilbert space associated with the quantum system to an output operator $O_{output}$ on the Hilbert space. Each quantum operation $\mathcal{C}_i$ may be represented via a function $f_i$ of some generator $G_i$ according to $O_{output} = \mathcal{C}_i(O_{input}) = f_i(G_i) O_{input} f_i(G_i)^\dagger$. In one example, the classical computer may receive the representation of each quantum operation $\mathcal{C}_i$ in terms of a representation of the generators. The generators may have a representation in terms of the monomials in one example.

Each input operator of the method is in particular represented as a linear combination of monomials, i.e., $O_i = \Sigma_j o_{ij} M_j$. In the calculation step associated with the index i, the adjoint quantum operation $\mathcal{C}_i^\dagger$ is applied to the input operator $O_i$. The result may be represented as a linear combination of monomials, $\mathcal{C}_i^\dagger(O_i) = \sum_j c_{ij} M_j$, wherein the monomials in the linear combination are in the set of monomials, $M_j \in \mathcal{M}$. Then, the input operator $O_{i-1}$ for the next calculation step associated with the index (i-1) is obtained by truncating all monomials in the calculation result having a length greater than the predetermined first threshold value. I.e., the input operator $O_{i-1}$ for the next calculation step associated with the index (i-1) is of the form $O_{i-1} = \Sigma_j c_{ij} M_j$, wherein the monomials in the linear combination are in the set of monomials with length less or equal than the first threshold length $k_{thr}$, $M_j \in \mathcal{M}^{[k_{thr}]}$.

The final result is calculated by truncating the result of the last calculation step, i.e., by truncating all monomial terms having a length greater than the predetermined first threshold length in the operator $\mathcal{C}_1^\dagger(O_1) = \sum_j c_{1j} M_j$, to thereby obtain the final operator $O_0 = \Sigma_j c_{1j} M_j$ wherein the monomials in the linear combination are in the set of monomials with length less or equal than the first threshold length $k_{thr}$, $M_j \in \mathcal{M}^{[k_{thr}]}$. Then, the approximation of the expectation value of the operator 0 is obtained by calculating the trace of the product of the final operator $O_0$ and the initial state operator $\rho_{ini}$, tr$[\rho_{ini}O_0]$.

The initial state operator $\rho_{ini}$ may describe a pure quantum state in one example, $\rho_{ini} = |\Psi_{ini}\rangle\langle\Psi_{ini}|$. In another example, the initial state operator may describe a mixed quantum state $\rho_{ini} = \Sigma_i \lambda_i |\psi_i\rangle\langle\psi_i|$. In particular, the classical computer may receive a representation of the initial state operator in terms of the monomials.

The first threshold value for the truncation of the monomials may be a small integer value. In particular, the first threshold value may be at most 10 in one example, in particular 2, 3, 4, 5, 6, 7, 8, 9 or 10. However, the invention is not limited to this. In another example, the first threshold vale may be at most 15, at most 20 or at most 25. The first threshold value may be selected by a user of the method. The smaller the first threshold value the more efficient is the calculation as fewer monomials have to be considered in the calculation. The larger the first threshold value, the more precise the result of the approximate calculation of the expectation value.

In one embodiment of the method according to the first aspect of the present invention, the finite dimensional quantum system is a Fermionic quantum system described in a basis of 2N linearly and algebraically independent Fermionic basis operators. Such an embodiment has a high importance in many problems of quantum chemistry, condensed matter physics and solid state physics, as fermionic particles form the basic building block of matter and thereby determine the properties of molecules, solids, condensed matter systems, etc.

In one example, the Fermionic quantum system may be described by N Fermionic creation and annihilation operators $\left\{a_i^\dagger\right\}_{i=1,\ldots,N}$ and $\{a_i\}_{i=1,\ldots,N}$ satisfying the canonical anti-commutation relations $\left\{a_i, a_j\right\} = a_i a_j + a_j a_i = 0, \left\{a_i^\dagger, a_j^\dagger\right\} = 0, \left\{a_i^\dagger, a_j\right\} = \delta_{ij}\mathbb{1}$, where $\mathbb{1}$ is the identity operator. In this case, the creation and annihilation operators may have a predetermined ordering in the monomials. E.g., a creation operator of a mode with index i, $a_i^\dagger$ may always appear to the left of the corresponding annihilation operator $a_i$, i.e., the monomials may be of the form $\left(a_1^\dagger\right)^{n_1}(a_1)^{n'_1} \ldots \left(a_N^\dagger\right)^{n_N}(a_N)^{n'_N}$. In another example, all monomials may be defined in the normal ordering commonly known, i.e., all creation operators are to the left of all annihilation operators. I.e., the monomials may be of the form $\left(a_1^\dagger\right)^{n_1} \ldots \left(a_N^\dagger\right)^{n_N}(a_1)^{n'_1} \ldots (a_N)^{n'_N}$.

In another example, the Fermionic quantum system may be described by 2N unitary and self-adjoint Majorana

operators $\{m_k\}_{k=1,...,2N}$ which may be defined via $m_{2j} = a_j^\dagger + a_j$ and $m_{2j-1} = i\left(a_j^\dagger - a_j\right)$ . The Majorana operators obey the canonical anti-commutation relations $\{m_j, m_k\} = 2\delta_{ij}\mathbb{1}$ .

When the finite dimensional quantum system is a Fermionic quantum system, the initial state operator may be a Fock state or a convex combination of Fock states. A Fock state may be represented by a wave function $| n_1, ..., n_N \rangle = \left(a_1^\dagger\right)^{n_1} ... \left(a_N^\dagger\right)^{n_N} | vac \rangle$ , wherein $| vac \rangle$ is the fermionic vacuum state, and $n_i \in \{0,1\}$, $i = 1, ...,$ N. In another example the initial state may consist of a linear combination of few Fock states, e.g., two, three, four or more Fock states, or it may be a convex combination of such linear combinations.

In one embodiment of the method according to the first aspect of the present invention, the initial state operator $\rho_{ini}$ may be such that a trace of a product of one of the monomials and the initial state operator can be calculated for any monomial of the set of monomials on the classical computer in a time and by use of memory that scales polynomially in the number of basis operators of the set of basis operators. I.e., when there are B basis operators in the set of basis operators, the runtime for calculating the trace of the product of one of the monomials and the initial state operator is $\mathcal{O}\left(B^k\right)$ for some positive constant k, and the required memory is $\mathcal{O}\left(B^{\tilde{k}}\right)$ for some positive constant $\tilde{k}$. This is in particular fulfilled for Fermionic systems described by 2N creation and annihilation operators or 2N Majorana operators, and wherein the initial state operator is a Fock state, a linear combination of few Fock states or a convex combination of such states.

In one embodiment of the method according to the first aspect of the present invention at least one of the quantum operations may be represented by a linear combination of the monomials. In one example, every quantum operation may be represented by a linear combination of the monomials. In particular, when the quantum operation $\mathcal{C}_i$ is represented via a function $f_i$ of some generator $G_i$ according to $O_{output} = \mathcal{C}_i (O_{input}) = f_i(G_i)O_{input}f_i(G_i)^\dagger$, the generator may be represented by a linear combination of monomials, i.e., $G_i = \Sigma_j g_{ij}M_j$ , wherein the $M_j$ are monomials of the set of monomials.

In one embodiment of the method according to the first aspect of the present invention, at least one quantum operation may be a unitary operation. In one example, every quantum operation may be a unitary operation. In particular, when the quantum operation $\mathcal{C}_j$ is represented via a function fj of some generator $G_j$ as explained above, $f_j(G_j)$ may be of the form $f_j(G_j) = e^{iG_j}$ wherein the generator $G_j$ is Hermitian. In particular, the Hermitian generator may be represented as a linear combination of the monomials. This case is of particular importance as such a sequence of quantum gates may be obtained from a Trotterization of a Hamiltonian time evolution.

However, the invention is not limited to unitary quantum operations. For example, a sequence of non-unitary quantum operations may result from a Trotterization of an imaginary time evolution with a Hamiltonian. This approach may be used to numerically obtain a ground state of a quantum system.

In one embodiment of the method according to the first aspect of the present invention, the method may further comprise truncating all monomials in the representation of the quantum operations and/or in the representation of the operator having a length greater than a predetermined second threshold length. Then, the calculation steps may only involve quantum operations with a representation in terms of monomials having a length which is at most the second threshold length. This may improve the efficiency of the calculation. In one example, when the generators of the quantum operations are represented by linear combinations of monomials as explained above, i.e., $G_i = \Sigma_j g_{ij}M_j$, the method may comprise truncating all monomials in these linear combinations having a length above the second threshold length. The first threshold length may be identical to the second threshold length in one example. However, the invention is not limited to this, and the first threshold length may be larger or smaller than the second threshold length in certain examples. The truncation may be carried out by the classical computer in one example. In another example, the classical computer may accept only representations of the quantum operations and the observable with monomials having a length equal to or smaller than the second threshold length. Many problems in the field of quantum chemistry may be formulated in terms of such quantum operations and such operators, so that this embodiment is of high practical relevance.

In one embodiment of the method according to the first aspect of the present invention, the operator may be a Hermitian operator. In this case the expectation value of the operator corresponds to an expectation value of an observable, like the energy, the momentum, a particle number, a spin, etc. This embodiment is of high practical relevance. However, the invention is not limited to this and may also be used for calculating of expectation values of non-Hermitian operators.

In one embodiment, the method according to the first aspect of the present invention may further comprise determining a final sequence of quantum operations by starting from an initial sequence of quantum operations as an input of an iteration, wherein in each iteration step the expectation value of the operator 0 is approximately computed according to anyone of the above, and the sequence of quantum operations of the next iteration step is determined on the basis of the expectation value of the operator calculated in the preceding iteration step. In one example, the embodiment may be used in combination with a variational algorithm, like the Variational Quantum Eigensolver (VQE). The goal of the VQE is to obtain a ground state of a quantum system by iteratively changing a trial wave function of a quantum system which is prepared by application of a sequence of parameter-dependent quantum operations to a known initial state. The VQE algorithm is in general implemented by a hybrid quantum-classical computing system comprising a quantum computer and a classical computer. In particular, in each iteration step, the quantum computer is used to implement the application of the sequence of quantum operations to the initial state. Thereby, a final quantum state is obtained. Then, a quantum measurement is performed on the final state to thereby estimate an expectation value of an observable. The expectation value of the observable is provided to the classical computer. The classical computer calculates updated parameter values for the quantum operations of the next iteration step on the basis of the expectation value. In the end, a desired quantum state may be prepared by the quantum computer by applying a (final) sequence of quantum operations to the initial state. However, due to the probabilistic nature of quantum mechanics, this algorithm's requirements are computationally costly. In particular, many shots are required for estimating the expectation value of the observable via the quantum measurements.

According to the embodiment of the present invention, the final sequence of quantum operations which is required to prepare the quantum state of interest may be obtained via the embodiment of the method of the first aspect of the present invention which may be fully implemented on the classical computer. Thereby, quantum resources may be saved.

In one expedient embodiment, the method may further comprise:

providing a representation of the final sequence of quantum operations and a representation of the initial state operator to a quantum computer comprising a plurality of quantum mechanical particles and means to apply quantum operations thereto;

preparing, by the quantum computer, the quantum mechanical particles in the initial quantum state;

applying, by the quantum computer, the sequence of quantum operations to the initial state to thereby obtain a final state of the plurality of quantum mechanical particles.

I.e., after the final sequence of quantum operations is obtained, the quantum state of interest may be prepared by the quantum computer. The final state may be used for further tasks in the field of quantum information.

In one expedient example, the method further comprises a quantum measurement applied to the final state to thereby obtain an expectation value of an observable of interest. In one example when the operator 0 is Hermitian, the quantum measurement may be such that it allows to determine an expectation value (more precisely, an estimator value of the expectation value) of the observable associated with the Hermitian operator $O$.

In one further embodiment of the method according to the first aspect of the present invention, the plurality of quantum mechanical particles may be a plurality of qubits, and the method may further comprise mapping the initial state operator and the sequence of quantum operations to a qubit representation, and wherein the representation of the sequence of quantum operations and the representation of the initial state operator provided to the quantum computer are the respective qubit representations. The qubits may be superconducting qubits, ions, atoms, photons or any other type of qubits.

Fermion-to-qubit mappings are known in the art. A prominent example is the Jordan-Wigner-transformation. Other examples of Fermion-to-qubit mappings are disclosed in Refs. [1] and [2]. However, the invention is not limited to these examples.

According to a second aspect of the present invention, there is provided a computing system comprising a classical computer and a quantum computer with a plurality of quantum mechanical particles and means to apply quantum operations thereto, wherein the classical computer is configured to carry out the method according to the above embodiment which comprises determining a final sequence of quantum operations by starting from an initial sequence of quantum operations as an input of an iteration, wherein in each iteration step the expectation value of the operator 0 is approximately computed according to anyone of the above, and the sequence of quantum operations of the next iteration step is determined on the basis of the expectation value of the operator calculated in the preceding iteration step, and wherein the quantum computer is configured to receive the final sequence of quantum operations and the initial state operator, to prepare the quantum mechanical particles in the initial quantum state and to apply the sequence of quantum operations to the initial state to thereby obtain a final state of the quantum mechanical particles.

The quantum computer may further comprise measurement means for implementing a quantum measurement on the quantum mechanical particles. In particular, the quantum measurement may be such that it allows to estimate an expectation value of an observable.

In particular, the plurality of quantum mechanical particles may be a plurality of qubits. The qubits may be superconducting qubits, ions, atoms, photons or any other type of qubits.

According to a third aspect of the present invention, there is provided a computer program product comprising instructions which, when the computer program product is carried out by a classical computer, cause the classical computer to carry out the method according to anyone of the above.

According to a fourth aspect of the present invention, there is provided a data carrier having stored thereon the computer program product according to the third aspect of the present invention. In particular, the data carrier is a non-transitory data carrier. For example, the data carrier may be a hard disk, a CD-ROM, a USB-stick, and other similar mediums.

## III. BRIEF DESCRIPTION OF THE DRAWINGS

In the following, the invention will be described in greater detail by way of example with reference to the figures in which

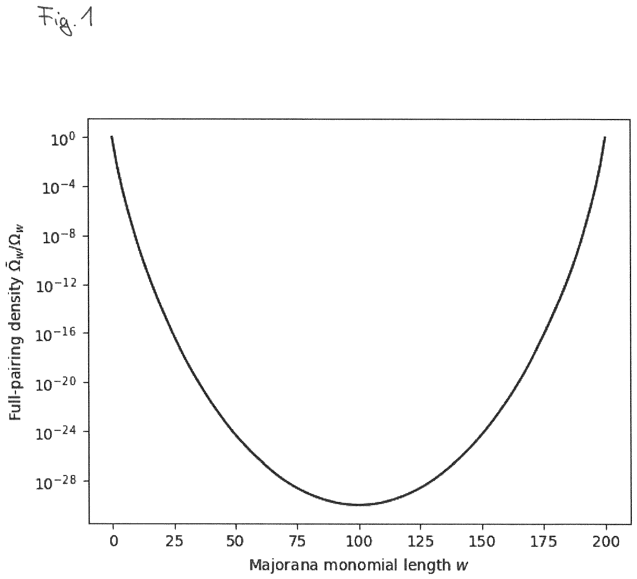

Fig. 1    depicts a full-pairing density $\overline{\Omega}_w/\Omega_w$ as a function of the length of Majorana monomials for a Fermionic quantum system described by 2N = 200 Majorana operators;

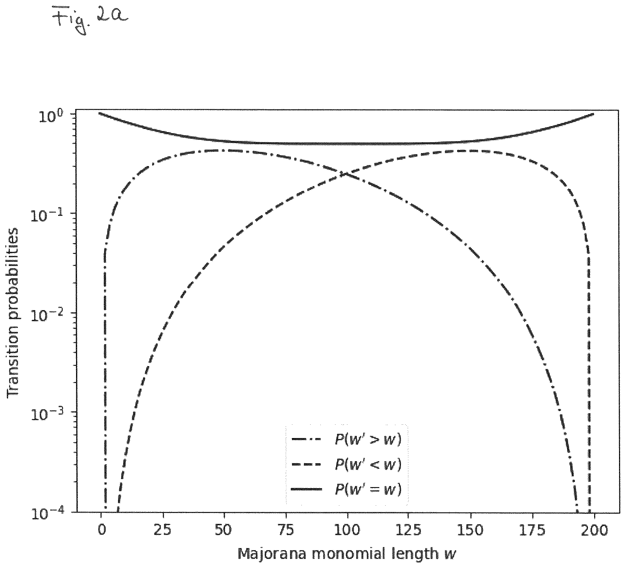

Fig. 2a    depicts transition probabilities of a Majorana monomial with length w under an action of a unitary quantum operation to a Majorana monomial with larger length ($P(w' > w)$) or smaller length ($P(w' < w)$), and the probabilities that the length of the Majorana monomial does not change ($P(w' = w)$) under the action of the unitary operation as a function of the length w of the Majorana monomial for a Fermionic quantum system described by 2N = 200 Majorana operators and a threshold length of k=4 for the Majorana monomials;

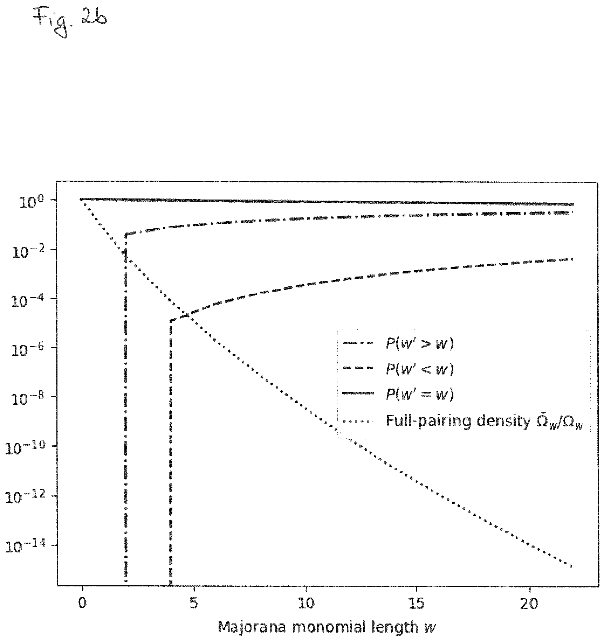

Fig. 2b    is an enlarged view of the plot shown in Fig. 2a up to a length of the Majorana monomial to about w=20;

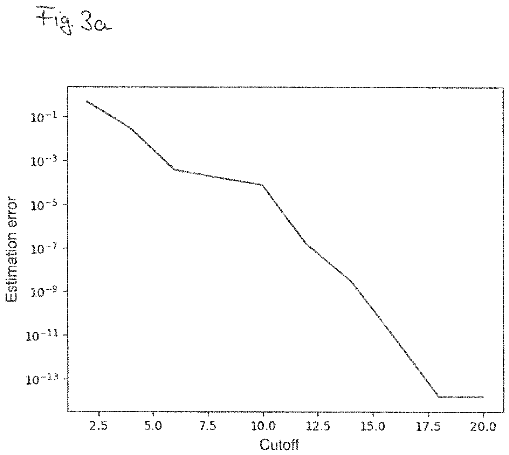

Fig. 3a    depicts the error in estimating the ground state energy of the ground state of the 12-mode LiH molecule Hamiltonian prepared by an application of a quantum circuit with 13 unitary gates to a Hartree-Fock slater determinant using the method according to the present invention with different cutoff w (maximum length of the Majorana monomials);

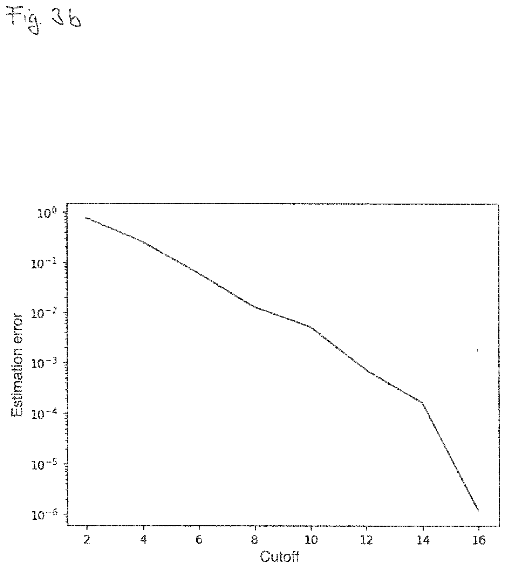

Fig. 3b    depicts the error in estimating the ground state energy of the ground state of the 14-mode $BeH_2$ molecule Hamiltonian prepared by an application of a quantum circuit with 74 unitary gates to a Hartree-Fock slater determinant using the method according to the present invention with different cutoff w (maximum length of the Majorana monomials);

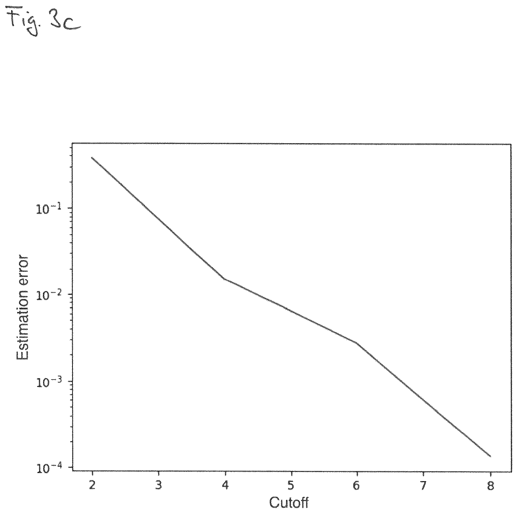

Fig. 3c    depicts the error in estimating the ground state energy of the ground state of the 16-mode BODIPY molecule Hamiltonian prepared by an application of a quantum circuit with 874 unitary gates to a Hartree-Fock slater determinant using the method according to the present invention with different cutoff w (maximum length of the Majorana monomials)

## IV. DETAILED DESCRIPTION OF THE INVENTION

This invention relates to a finite-dimensional quantum system $\mathcal{S}$ described in some operator basis $\mathcal{B} = \{m_1,..., m_B\}$, where the operators in $\mathcal{B}$ are linearly and algebraically independent. This means that the set of monomials $\mathcal{M} = \{m_1^{b_1} m_2^{b_2} \cdots m_B^{b_B} : b_i \in \{0,1\}, \forall i \in \{1, ..., B\}\}$ forms a basis of the space of linear operators in the Hilbert space of said quantum system.

Definition 1 *Let the length function $\mathcal{L}$ be defined for each monomial $m_1^{b_1} m_2^{b_2} \cdots m_B^{b_B}$ in $\mathcal{M}$ as*

$$\mathcal{L}(m_1^{b_1} m_2^{b_2} \cdots m_B^{b_B}) = \sum_{i=1}^{B} b_i$$

**Definition 2** *Let the set $\mathcal{M}^{[k]}$ be defined as the set of monomials of length less or equal to k,*

$$\mathcal{M}^{[k]} = \{M \in \mathcal{M} : \mathcal{L}(M) \leq k\}, k \in [0, B]$$

The problem presented is to the following:

i. An initial state $\varrho_{\mathrm{ini}}$ such that the trace tr($M\varrho_{\mathrm{ini}}$) can be computed, for any $M \in \mathcal{M}$, in time and with memory scaling polynomially in B on a classical computer.

ii. A sequence of operations $C = C_L \circ \dots \circ C_2 \circ C_1$ where each operation $C_i$ is a function $f_i$ of some generator $G_i$, so that $C_i$ acts on an input operator $O_{\mathrm{input}}$ to produce an output operator $O_{\mathrm{output},i}$ according to $O_{\mathrm{output},i} = C_i(O_{\mathrm{input}}) = f_i(G_i)O_{\mathrm{input}}f_i(G_i)^\dagger$, and where each generator $G_i$ is explicitly defined as a linear combination of limited-length monomials, that is, $G_i = \Sigma_j g_{ij}M_j$, $g_{ij} \in \mathbb{C}$, $M_j \in \mathcal{M}^{[k]}$, $\forall i$ for some $k < B$, typically $k \ll B$.

iii. An operator $O$ explicitly defined as a linear combination of limited-length monomials, that is, $O = \Sigma_j o_j M_j$, $o_j \in \mathbb{C}$, $M_j \in \mathcal{M}^{[l]}$ for some $l < B$, typically $l \ll B$.

The purpose of this invention is to classically estimate the quantity

$$\langle O \rangle = \mathrm{tr}\left[ \mathcal{C}(\varrho_{\mathrm{ini}})O \right]$$

The inventive method hereby introduced consists in propagating $O$ through $C$ in the Heisenberg picture whilst keeping only the contributions corresponding to monomials in $\mathcal{M}^{[w]}$ at each step, where $w$ is the level of approximation decided by the user. Since $|\mathcal{M}^{[w]}| = \mathcal{O}(B^w)$, the method runs in time $\mathcal{O}(LB^w)$ and requires memory $\mathcal{O}(B^w)$.

**Definition 3** *Let the truncation function* $\mathcal{T}_w$ *be the function that, given an input operator* $O_{\mathrm{input}} = \Sigma_j o_j M_j$, $o_j \in \mathbb{C}$, $M_j \in \mathcal{M}$, *returns the output operator* $O_{\mathrm{output}}^{[w]} = \mathcal{T}_w(O_{\mathrm{input}}) = \sum_j o_j M_j$, $o_j \in \mathbb{C}$, $M_j \in \mathcal{M}^{[w]}$. *That is,* $\mathcal{T}_w$ *truncates all terms corresponding to monomials M of length* $\mathcal{L}(M) > w$.

The inventive method proceeds according to the following steps:

A. Define $O \to O^{[w]}$.

B. For $t = 1, \dots, L$, update $O^{[w]}$ iteratively as

$$\mathcal{T}_w\left( C_{L-t+1}^\dagger(O^{[w]}) \right) \to O^{[w]},$$

where $C_i^\dagger(O^{[w]}) = f_i(G_i)^\dagger O^{[w]} f_i(G_i)$.

C. The output $O^{[w]} = \Sigma_j o_j M_j$, $o_j \in \mathbb{C}$, $M_j \in \mathcal{M}^{[w]}$ is then used to approximate $\langle O \rangle$ as

$$\langle O \rangle \approx \sum_j o_j \mathrm{tr}\left( M_j \varrho_{\mathrm{ini}} \right), \; o_j \in \mathbb{C}, \; M_j \in \mathcal{M}^{[w]}$$

In some non-limiting embodiments, the initial operator $O$ may be substituted with the truncated operator $\mathcal{T}_w(O)$.

The following specific embodiments are provided as illustrative examples of the method described herein, and are not intended to limit the scope of the invention, but rather to describe common applications of the general elements introduced above.

1. The set of basis operators $\mathcal{B}$ may be

a. Fermionic creation and annihilation operators,

$$\mathcal{B} = \{a_1, \dots, a_N, a_1^\dagger, \dots, a_N^\dagger\},$$

where $N$ is the number of Fermionic modes and the operators fulfill the anti-commutation relations

$$\{a_i, a_j\} = \{a_i^\dagger, a_j^\dagger\} = 0 \quad \text{and} \quad \{a_i^\dagger, a_j\} = \delta_{ij}\mathbb{I}$$

b. Majorana operators $\mathcal{B} = \{m_1, \dots, m_{2N}\}$ related to the latter operators through

$$m_{2j} = a_j^\dagger + a_j \quad \text{and} \quad m_{2j-1} = i\left(a_j^\dagger - a_j\right)$$

and satisfying the anti-commutation relations

$$\{m_i, m_j\} = 2\delta_{ij}\mathbb{I}$$

c. Pauli strings $\mathcal{B} = \{P_1, \dots, P_{2N}\}$, with $P_i \in \{I, X, Y, Z\}^{\otimes N}$, where 1, $X$, $Y$, and 2 are singlequbit Pauli operators, satisfying the anti-commutation relations

$$\{P_i, P_j\} = 2\delta_{ij}\mathbb{I}$$

Such a set of Pauli strings is commonplace in situations where a Fermionic problem is mapped to qubit space in order to simulate the system on a multi-qubit quantum computer.

2. The initial state $\varrho_{\mathrm{ini}}$ may be

a. The operator representation $|\psi\rangle\langle\psi|$ of a Fock basis state $|\psi\rangle$, such as the Fermionic vacuum $|\psi\rangle = |$vac or a single Slater determinant $|\psi\rangle = (a_1^\dagger)^{n_1} \cdots (a_N^\dagger)^{n_N}|\mathrm{vac}\rangle$, $n_i \in \{0, 1\}$, $\forall i$.

b. The operator representation $|\psi\rangle\langle\psi|$ of a linear combination of a small number of Slater determinants $|\psi\rangle = \Sigma_i c_i|\psi_i\rangle$, $c_i \in \mathbb{C}$, $|\psi_i\rangle = (a_1^\dagger)^{n_1^i} \cdots (a_N^\dagger)^{n_N^i}|\mathrm{vac}\rangle$, $n_j^i \in \{0, 1\}$, $\forall_{i, j}$.

3. The sequence of operations C may be

a. A unitary quantum circuit where every operation $C_i$ is a unitary gate of the form $f_i(G_i) = \exp(iG_i)$ where the coefficients $g_{ij}$ in the definition of the Hermitian generators $G_i = \Sigma_j g_{ij}M_j$, $g_{ij} \in \mathbb{C}$, $M_j \in \mathcal{M}^{[k]}$ are to be adjusted as to variationally minimize the energy function $\langle H\rangle = \mathrm{tr}\,[\dot{\mathcal{C}}(\varrho_{\mathrm{ini}})H]$, where $H$ is the Hamiltonian of the system, in order to determine its ground-state energy.

b. A unitary quantum circuit where every operation $C_i$ is a unitary gate of the form $f_i(G_i) = \exp(iG_i)$ resulting from the Trotterization of the time-evolution operator $exp(-itH)$, where $H$ is the Hamiltonian of the system.

c. A non-unitary transformation where every operation $C_i$ is a gate of the form $f_i(G_i) = \exp(G_i)$ resulting from the Trotterization of the imaginary-time-evolution operator $\exp(-tH)$, where $H$ is the Hamiltonian of the system, used to determine the ground-state energy of the system as $\lim_{t\to\infty} \mathrm{tr}\,[\exp(-tH)\varrho_{\mathrm{ini}}\exp(-tH)^\dagger H]/\mathrm{tr}\,[\exp(-tH)\varrho_{\mathrm{ini}}\exp(-tH)^\dagger]$.

4. The operator $O$ may be

a. The system Hamiltonian $H$, which typically can be represented exactly as $H = \Sigma_j h_j M_j$, $h_j \in \mathbb{C}$, $M_j \in \mathcal{M}^{[4]}$ for systems of interacting Fermions.

b. Powers of the Hamiltonian $H^k$, $k \in \mathbb{Z}^+$, for instance to determine the energy variance $\langle H^2\rangle - \langle H\rangle^2$ and therefore assess whether the state $\mathcal{C}(\varrho_{\mathrm{ini}})$ is close to an eigenstate of $H$.

c. Fermionic $n$-reduced density matrix elements, defined as $\{(a_1)^{p_1} \cdots (a_N)^{p_N}(a_1^\dagger)^{q_1} \cdots (a_N^\dagger)^{q_N}\}$, $p_i \in \{0, 1\}$, $q_i \in \{0, 1\}$, $\Sigma_i p_i = \Sigma_i q_i = n$, or their equivalent Majorana representation, or their equivalent qubit representation in terms of Pauli strings using a fermion-to-qubit mapping.

The following provides an overview of the theoretical underpinnings and advantages of the method described.

The specific embodiment corresponds to the elements set forth in the claims as follows: basis operators as described in element 1b, an initial state of the form outlined in element 2a, and a sequence of operators as detailed in element 3a, where each generator is proportional to a single monomial. Importantly, in this embodiment, the operator itself remains unspecified. These details are further elaborated in the subsequent paragraph, beginning with "where $|\psi\rangle$ = ...".

An $N$-mode Fermionic system in second quantization is typically described through N creation and annihilation operators, $\{a_i^\dagger\}_{i=1,...,N}$ and $\{a_i\}_{i=1,...,N}$ satisfying the relations

$$\{a_i, a_j\} = \{a_i^\dagger, a_j^\dagger\} = 0 \quad \text{and} \quad \{a_i^\dagger, a_j\} = \delta_{ij}\mathbb{I}$$

Another useful set of operators to describe Fermionic systems are the $2N$ Majorana operators $\{m_k\}_{k=1,...,2N}$ defined as

$$m_{2j} = a_j^\dagger + a_j \quad \text{and} \quad m_{2j-1} = i\left(a_j^\dagger - a_j\right)$$

which are unitary, self-adjoint, and obey the Majorana anti-commutation relations

$$\{m_i, m_j\} = 2\delta_{ij}\mathbb{I}$$

Any Fermionic operator can be uniquely expressed as a linear combination of Majorana. monomials $m_{x_1} \cdots m_{x_l}$.

To ease the notation in what follows, let us refer to a length-$l$ Majorana monomial (that is, belonging to $\mathcal{M}^{[l]}$) with the shorthand $l$-MM. Notice that, owing to the anti-commutation relations between Majorana operators, any repeated terms in a monomial cancel out, so each operator can appear at most once in a monomial. Also, any monomial is equal to itself upon reshuffling of its elements up to a sign, so we will assume $x_1 < x_2 < ... < x_l$ throughout without loss of generality.

The quantity the invention computes relates to the following equation

$$\text{tr}\left[U|\psi\rangle\langle\psi|U^\dagger O\right],$$

where $|\psi\rangle = (a_1^\dagger)^{n_1}(a_2^\dagger)^{n_2}...(a_N^\dagger)^{n_N}|\text{vac}\rangle$, with $n_i \in \{0,1\}$, is a Fock basis state. The circuit $U = U_1 U_2 \cdots U_{D-1} U_D$ is a sequence of Fermionic gates, where each gate $U_i = \exp(-iG_i)$ is generated by a Hermitian Fermionic generator $G_i = \sum_{j=1}^{z_i} \theta_i^j M_i^j$ and $M_i^j$ are l-MMs. The invention assumes $l$ even and $l \leq k$ for all gates and for some pre-defined value of $k$ (typically $k = 4$). The quantity to be simulated is described by the operator $O$. An assumption of the invention is $O$ to be of bounded Majorana length, that is, $O = \Sigma_a c_a M_a$ where the $M_a$ are $l$-MM with $l < k'$ (typically, $k' = 4$, for instance for interacting Hamiltonians).

Equation (3) in Ref. [3] lays out explicitly the effect of applying a gate generated by a single Pauli string $P$ to another Pauli string $Q$,

$$e^{i\theta P/2}Qe^{-i\theta P/2} = \begin{cases} Q, & [P,Q] = 0, \\ \cos(\theta)Q + i\sin(\theta)PQ, & \{P,Q\} = 0 \end{cases}$$

The above expression applies to multi-qubit systems. However, previous work by the inventor and colleagues (Ref. [1]), led to the realization that, since Majorana monomials are mapped to Pauli strings under fermion-to-qubit mappings, the expression must hold if $P$ and $Q$ are Majorana monomials. Thus, consider the simulation of operator $O$ in the Heisenberg picture at step $T$. The current operator is $O_{T-1} = U_{T-1}^\dagger \cdots U_1^\dagger O U_1 \cdots U_{T-1}$, which can be decomposed in terms of Majorana monomials as

$$O_{T-1} = \sum_a c_a^{T-1} M_a^{T-1}$$

The operator $O_T = U_T^\dagger O_{T-1} U_T$ can be computed by evolving each of the individual monomials as $U_T^\dagger M_a^{T-1} U_T$. Suppose $U_T$ is generated by a single $k$-MM $G_T = \theta_T M_T$. The output reads

$$e^{i\theta_T M_T/2} M_a^{T-1} e^{-i\theta_T M_T/2} = \begin{cases} M_a^{T-1}, & [M_T, M_a^{T-1}] = 0, \\ \cos(\theta_T) M_a^{T-1} + i\sin(\theta_T) M_T M_a^{T-1}, & \{M_T, M_a^{T-1}\} = 0 \end{cases}$$

The anti-commutator $\{M_T, M_a^{T-1}\} = 0$ if and only if the number of Majorana operators common to both monomials is odd. Since even repetitions of Majorana operators in a monomial cancel out, the length of the monomial appearing in the branching term, $M_T M_a^{T-1}$, must be smaller than the sum of each monomial's length. More precisely, let $M_T$ be a $k$-MM and $M_a^{T-1}$ be a $w$-MM. The length $w'$ of the term $M_T M_a^{T-1}$ is $w' = k + w - 2s$, where s is the size of the set of overlapping Majorana operators. Since s must be odd, if $k$ is even, the output operator's length has the same parity as the input operator; in this specific non-limiting embodiment, the invention shall only be concerned with even-length Majorana monomials, given that $O$ contains only even terms. Importantly, if $s < k/2$, the branching process increases Majorana length, $w' > w$, while it $w' < w$ if $s > k/2$.

Thus, if both $k$ and $w$ are considerably smaller than the number of Majorana operators $n = 2N$, smaller values of s are most likely than larger ones. This can be seen through statistical arguments as follows. For concreteness, assume $n = 100$, and consider an arbitrary 4-MM $M_a^{T-1}$. Suppose 4-MM $M_T$ is drawn from the set of all 4-MMs with uniform probability for no particular reason. If there is a branching event, $\{M_T, M_a^{T-1}\} = 0$, the overlap s must be either 1 or 3. It is far more likely that only 1 Majorana in $M_T$ matches the set in $M_a^{T-1}$ than that 3 Majorana elements do. Therefore, there seems to be an unbalanced branching process whereby low-length MM tend to branch towards high-length MM with much higher probability than in the reverse direction, which must lead to a net flow towards the large-$l$ MM sector of operator space. Similar considerations hold when the Fermionic gates are generated by more complex linear combinations of $k$-MM.

Based on the inventor's previous work on fermion-to-qubit mappings and statistical analysis, it is clear that only low-length MMs contribute significantly to the expectation value under consideration. This becomes apparent upon writing said quantity explicitly in terms of the decomposition of the Heisenbergevolved operator $O_D = U^\dagger O U$,

$$\text{tr}\left[U|\psi\rangle\langle\psi|U^\dagger O\right] = \sum_a c_a^D \text{tr}\left[|\psi\rangle\langle\psi|M_a^D\right]$$

In particular, only a very small fraction of the $w$-MM with $w \gg 2$ and $w \ll 2N$ fulfill $\text{tr}\left[|\psi\rangle\langle\psi|M_a^D\right] \neq 0$, since $|\psi\rangle$ is a Fock-basis state. Indeed, if the fermion-to-qubit mappings introduced in Ref. [1] are used, (i) $|\psi\rangle$ is mapped to a computational-basis state (an eigenstate of the Pauli string $Z^{\otimes N}$) and (ii) the Pauli string $M_a^D$ is mapped to must contain at least one $X$ or one $Y$ operator unless all the Majorana operators in the monomial MD are fully paired, that is, unless for every even Majorana, operator $m_{2i}$ in the monomial, the odd Majorana operator $m_{2i-1}$ is also in the monomial. Thus, the trace can be different from 0 if and only if the Majorana operators in $M_a^D$ are fully paired. This fact can also be proved without the use of fermion-to-qubit mappings, solely based on the algebraic properties of Majorana monomials. Since the set of fully paired $w$-MM is much smaller than the whole set of $w$-MM for large $w$, this is very unlikely and therefore those terms can be safely disregarded if we assume that the circuit has populated all $w$-MM with coefficients $c_a^D$ of the same order of magnitude.

Based on these observations, the idea behind the method for this specific non-limiting embodiment is to evolve operators in the Heisenberg picture using the Majorana representation. At each step, that is, after each gate is applied, all terms corresponding to Majorana monomials with length above a certain threshold are to be discarded. In typical circuits, the method is expected to result in an accurate computation since high-length MM truncated along the way would most likely keep increasing in length along the way, therefore sharply decreasing their relative importance for the quantity under evaluation.

First, consider the situation in which the operator $O$ has been propagated in the Heisenberg picture without any approximations. Suppose that, due to the circuit's complexity, all high-length $w$-MM $M_a^D$ in $O_D$ carry a similar weight, that is,

$$|c_a^D| \approx \frac{C}{\Omega_w},$$

where $C = O(1)$ is a constant and

$$\Omega_w = \frac{(2N)!}{(2N-w)!w!}$$

is the size of the set of of $w$-MM. The total contribution to the expectation value from $w$-MM is then

$$\mathcal{O}\left(C\frac{\bar{\Omega}_w}{\Omega_w}\right),$$

where

$$\bar{\Omega}_w = \frac{N!}{(N-w/2)!(w/2)!}$$

is the size of the set of fully paired $w$-MM. Figure 1 depicts the full-pairing density $\bar{\Omega}_w/\Omega_w$ as a function of $w$ for $N = 100$, from where it is clearly obvious that only $w \approx 0$ and $w \approx 2N$ contribute significantly, all other terms contributing many orders of magnitude less.

The invention accounts for the following two points, as well as the previous observation:

1. The fact that it is safe to disregard high-length $w$-MM in the final observable $O_D$ does not imply that it is safe to disregard high-length $w$-MM at intermediate steps; high-length $w$-MMs at step $T$ may still evolve towards low-length terms in $O_D$, so their removal at step $T$ may result in large errors.
2. High-length terms could evolve towards $w = 2N$, where their contribution matters, so eliminating high-length elements in $O_T$ may result in large errors.

The answer to these points is that a typical dynamics leads operators clustering around $w = N$, and the probability for their weight to increase all the way to $w = 2N$ or to decrease back to $w = 0$ is negligible.

To see this, consider a $w$-MM $M$ in $U_{T-1}^\dagger \cdots U_1^\dagger M_a U_1 \cdots U_{T-1}$, where $M_a$ is one of the components in the original *operator O*. Considering a specific embodiment in which $U_T$ is generated by a single monomial $G_T$, the probability for the unitary evolution of $M$ through $U_T$ not to result in operator branching, to result in higher-length branching, or to result in lower-length branching depends on the number of overlapping Majorana operators between $M$ and $G_T$. As stated above, if the number s of overlapping Majorana operators between $M$ and $G_T$ is even, there is no branching. If $s$ is odd, there is operator branching, towards increasing length if $s < k/2$, decreasing otherwise. For $M$ and $G_T$ randomly drawn uniformly from the set of $w$- and $k$-MM, the probability for the overlap between both to be equal to s is

$$P(s; N, w, k) = \frac{w!k!(2N-w)!(2N-k)!}{(w-s)!s!(k-s)!(2N-w-k+s)!(2N)!}$$

for $s \leq 2N - w - k$, $P(s; N, w, k) = 0$ otherwise. From this expression, the length-transition probabilities can be defined for the output operator length $w'$

$$P(w' > w) = \sum_{s=1,3,\ldots}^{\min(k/2,w)} P(s; N, w, k),$$

$$P(w' < w) = \sum_{s=\min(k/2,w)+1,\min(k/2,w)+3,\ldots}^{\min(k,w)} P(s; N, w, k),$$

$$P(w' = w) = 1 - P(w' > w) - P(w' < w)$$

Figures 2a and 2b illustrate these quantities for $N = 100$ and $k = 4$. Figure 2b focuses on the low-length part of Figure 2a, including the full-pairing density for greater detail.

These plots reveal a very clear dynamics. First off, a low-length operator $M$ is more likely not to branch, but when it does, it is towards higher length with an overwhelming likelihood. For instance, the transition $w' > w$ is about three orders of magnitude more likely than $w' < w$ for $w = 4$. (Note how the expected contribution of the branched-out term drops by nearly two orders of magnitude in the event.)

This probability imbalance remains very high until reaching $w = N$, where both events are equally likely. From that point onwards, the probabilities are imbalanced in the opposite direction, pulling the operators towards $w = N$. With these pictures the following are answers to the two posed questions above:

1. Once a low-length operator branches with a higher length component, said component is most likely to keep branching towards higher lengths, so the probability of that element returning to low-length MM is extremely low. Thus, removing it when it first branches out should not affect the final result significantly.

2. The same phenomenon, but in reverse order, precludes the evolution from reaching the other end of the spectrum, $w = 2N$. Thus, removing it when it first branches out should not affect the final result significantly.

Note that we have used single-MM-generated unitaries $U_T$ to analyze this process for simplicity. The same arguments hold for more complex generators as well, though their analytical examination is more complicated.

In conclusion, the evolution of Fermionic operators through typical circuits results in operators with support over an exponentially large set of Majorana monomials. However, these tend to cluster in a region in *operator* space where their contribution to the expectation value on Fock basis states is nearly irrelevant. The process may be considered statistically irreversible, by virtue of which terms with high Majorana length may be safely disregarded at any point along the evolution.

A different non-limiting embodiment of the inventive method takes as input a Fock basis state $|\psi\rangle$, a Fermionic circuit $U = U_1 U_2 \cdots U_{D-1} U_D$, where each gate $U_i = \exp(-iG_i)$ is generated by a Fermionic generator $G_i = \sum_{j=1}^{z_i} \theta_i^j M_i^j$ and $M_i^j$ are $l$-MM, and $z_i$ is a small integer. We will assume $l$ even and $l \le k$ for all gates and for some pre-defined value of $k$ (typically $k = 4$). The quantity to be evaluated is described by the operator Q. We will assume O to be of bounded Majorana length, that is, $O = \sum_a c_a M_a$ with $M_a$ $l$-MM with $l \le k'$ (typically, $k' = 4$, for instance for interacting Hamiltonians). An even threshold length, $w_{\text{thr}}$, must be inputted by the user.

For the particular embodiment discussed in the preceding paragraph, a possible computational implementation of the general steps A, B, and C is provided below. It is important to note that this is merely one exemplary embodiment offered for illustration, among many possible ways to implement steps A, B, and C in practice. The exemplary embodiment proceeds as follows.

1. Iterate over the elements $M_a$ in O. For each of them, follow step 2 onwards. Each $M_a$ may be processed by a different computer in order to parallelize the calculation.

2. Initialize two vectors $\vec{v}_a$, where each component is associated with a unique $w$-MM with $w$ even and $w \le w_{\text{thr}}$. All components should be initialized to 0 except for the one corresponding to $M_a$, which must be 1. The dimension $\mathcal{D}$ of the vector is

$$\mathcal{D} = \sum_{q=0,2,\ldots}^{w_{\text{thr}}} \frac{(2N)!}{(2N-q)!q!} \sim \mathcal{O}(N^{w_{\text{thr}}})$$

3. Define a bijective map A from the set of even-$w$ $w$-MMs with $w \le w_{\text{thr}}$ and the set of integers $\{1,\ldots,\mathcal{D}\}$.

4. Iterate over $T = 1, \ldots, D$. At each $T$, initialize update vector $\vec{u}_a$, of the same dimension as $\vec{v}_a$, as $\vec{u}_a = 0$.

5. For each $T$. iterate over $i = 1, \ldots, \mathcal{D}$ for which the $i$-th component in $\vec{v}_a$ is non-zero, $[\vec{v}_a]_i \ne 0$. For each such $i$, consider the corresponding $M_i$, i.e., for which $\Lambda(M_i) = i$, and compute the Majorana, decomposition of

$$U_T^\dagger M_i U_T = \sum_j c_j^i M_j^i,$$

where $M_j^i$ are Majorana, monomials. Note that the total number of non-zero coefficients $c_j^i$ is, at most, $2^{z_i}$, where $z_i$ is the number of MMs in the generator $G_T$. This fact stems from the observation that if $U_T^\dagger M_i U_T$ is expanded in terms of the Taylor series decompositions of $U_T^\dagger$ and $U_T$, the resulting expansion contains products of the $z_i$ MMs in $G_T$ and $M_i$ raised to some power; since even repetitions of MMs cancel out to identity, the expansion can be generated only by the products in the power set of said MMs.

6. For every $w$-MM $M_j^i$ with $w \leq w_{\text{thr}}$ in the above expansion, update the $\Lambda(M_j^i)$-th component of $\vec{u}_a$ as

$$[\vec{u}_a]_{\Lambda(M_j^i)} + [\vec{v}_a]_i\, c_j^i \rightarrow [\vec{u}_a]_{\Lambda(M_j^i)}$$

7. Once the loop over all $M_i$ is completed, update

$$\vec{u}_a \rightarrow \vec{v}_a$$

Move onto the next value of $T$ and repeat steps 5-7.

## V. TEST RESULTS

To evaluate the performance of the method, consider two simple molecular systems, LiH, BeH$_2$, as well as BODIPY, a more complex molecule actively researched for cancer therapeutics and diagnostic. For each of them, their electronic Hamiltonians $H$, comprising 12, 14, and 16 Fermionic modes is computed, respectively. Said Hamiltonians correspond to the operator $O$ in the above description of the method. The initial state in each case is the Hartree-Fock Slater determinant, so $\varrho_{\text{ini}}$ = |HF⟩⟨HF|, where |HF⟩ = $(a_1^\dagger)^{n_1} \cdots (a_N^\dagger)^{n_N}|\text{vac}\rangle$, with $n_i$ = 1 for the occupied orbitals in the Hartree-Fock wave-function. In all cases, the sequence of operations $\mathcal{C}$ consists of unitary gates generated by $G_i \in \mathcal{M}^{[4]}$. More precisely, $\mathcal{L}$ ($G_i$) = 2 or $\mathcal{L}$ ($G_i$) = 4 for all $i$. The circuits have been pre-optimized so that $\mathcal{C}$ ($\varrho_{\text{ini}}$) approximates the ground state of the corresponding Hamiltonian. The circuits approximating the LiH, BeH$_2$, and BODIPY ground states contain 13, 74, and 874 unitary gates, respectively.

For each such combination of initial state, circuit, and Hamiltonian, we use the proposed method to estimate ⟨$H$⟩ = tr [$\mathcal{C}$ ($\varrho_{\text{ini}}$ )$H$] with different levels of approximation $w$ (cutoff), and compare the obtained result against the exact, approximation-free value.

Figure 3a depicts the error vs cutoff $w$ for the 12-mode LiH molecule Hamiltonian. Figure 3b depicts the error vs cutoff $w$ for the 14-mode BeH$_2$ molecule Hamiltonian. Figure 3c depicts the error vs cutoff $w$ for the 16-mode BODIPY molecule Hamiltonian. In all cases, the estimation error decreases exponentially in the cutoff w, achieving high levels of accuracy at a fraction of the computational cost of the exact calculation. For reference, note that the exact calculation corresponds to cutoff values $w = 2N$, where $N$ is the number of modes, that is, 24, 28, and 32, respectively, and entails a computational cost exponential in $N$.

## VI. APPLICATIONS

Modern computational chemistry is limited by the complexity of the electronic structure problem. The chemical structures of molecular compounds, as well as their behavior in chemical reactions, are to a great extent dictated by the electronic energy landscape, that is, the energy of the electrons as a function of the position of the nuclei. While the theory describing said energy landscapes is understood, solving the Schrödinger equation is a daunting task often requiring unaffordable resources. This is a direct consequence of dimensionality, namely that relevant states such as the ground state of the system, when represented explicitly as |$\psi$⟩ = $\Sigma_b$ $c_b$|$b$⟩, where |$b$⟩ are Fock basis states, involve a vast (often exponentially large) set of coefficients $c_b$. Similarly, dimensionality hampers the in silico evaluation of other molecular properties.

Embodiments of the inventive method provide for abilities to evaluate energy landscapes and other properties of chemical systems computationally would have a significant impact in industries such as drug discovery and design, materials science, energy sciences such as nuclear energy, renewable energy technologies, and energy storage solutions, and the like. In particular, the following problems could be tackled more efficiently by various embodiments of the invention:

1. Compound optimization: accurately predicting chemical properties and reactions from first principles would enable optimizing drugs, energy materials, and materials for specific purposes such as favoring certain chemical reactions. For instance, lead optimization is a crucial step in drug design whereby promising compounds are optimized as to bind to the target protein with higher affinity while exhibiting favorable metabolic properties that ensure their safety. Accurate in silico calculations would enable finding optimized compounds that cannot be found with current methods.

In energy sciences, this could include the optimization of materials for energy storage, energy conversion, or nuclear applications, such as more efficient energy-dense materials, safer reactor components, or improved catalysts for fuel cells.

2. Exploring chemical compound space: the space of drug-like compounds has been estimated to contain around $10^{60}$ molecules, whilst only a fraction of it (around $10^8$) has been explored. The ability to simulate complex wave-functions efficiently would enable exploring this vast space computationally using especially tailored algorithms. In the realm of energy sciences, this capability could facilitate the discovery of new materials that improve energy efficiency, enhance energy storage capabilities, or perform well under extreme conditions, such as those found in nuclear reactors or renewable energy systems.

3. Producing high-quality training data for AI models: AI systems exhibit remarkable potential in fields heavily reliant on computational chemistry, as properly trained models can predict properties, reaction rates, and even suggest new compounds very efficiently. However, it is a well-known fact that AI systems are only as good as the training data they learn from. This poses not only practical challenges but also fundamental ones. For instance, an AI system trained on the aforementioned $10^8$ known drug-like compounds cannot be expected to produce sensible new compounds lying in distant areas of the chemical compound space. Reliable classical simulations of complex wave-functions could overcome this problem by enabling the generation of large training datasets from first principles, which an AI model could extrapolate from. For energy sciences, generating robust datasets could significantly enhance AI-driven discoveries in energy storage, nuclear energy, and renewable systems, leading to better materials for long-term stability, safer energy solutions, and more efficient conversion methods.

## VII. REFERENCES

[1] Miller, A., Zimborás, Z., Knecht, S., Maniscalco, S. and García-Pérez, G., 2023. Bonsai algorithm: Grow your own fermion-to-qubit mappings. PRX Quantum, 4(3), p.030314.

[2] Miller, A., Glos, A. and Zimborás, Z., 2024. Treespilation: Architecture-and State-Optimised Fermion-to-Qubit Mappings. arXiv preprint arXiv:2403.03992.

[3] Begušić, T., Hejazi, K. and Chan, G.K., 2023. Simulating quantum circuit expectation values by clifford perturbation theory. arXiv preprint arXiv:2306.04797.

[4] Kim, Y., Fddins, A., Anand, S., Wei, K.X., Van Den Berg, E., Rosenblatt, S., Nayfeh, H., Wu, Y., Zaletel, M., Temme, K. and Kandala, A., 2023. Evidence for the utility of quantum computing before fault tolerance. Nature, 618(7965), pp.500-505.

[5] Angrisani, A., Schmidhuber, A., Rudolph, M.S., Cerezo, M., Holmes, Z. and Huang, H.Y., 2024. Classically estimating observables of noiseless quantum circuits. arXiv preprint arXiv:2409.01706.

## Claims

1. A method of computational approximation of an expectation value in a finite dimensional quantum system described in a basis of linearly and algebraically independent basis operators, a set of monomials composed of the basis operators forming a basis of an operator space of linear operators associated with a Hilbert space of the quantum system, the method comprising:

   receiving a representation of an initial state operator $\rho_{ini}$ of the quantum system, a sequence $\mathcal{C} = \mathcal{C}_L \circ ... \circ \mathcal{C}_2 \circ \mathcal{C}_1$ of L quantum operations $\mathcal{C}_i$ represented in terms of the monomials and an operator 0 represented as a linear combination of the monomials;

   calculating, for each index i of the quantum operations $\mathcal{C}_i$ of the sequence, beginning with a last index i=L down to a first index i=1, an action of an adjoint quantum operation $\mathcal{C}_i^{\dagger}$ of the quantum operation $\mathcal{C}_i$ on an input operator

$O_i$, $c_i^\dagger(O_i)$, wherein the first input operator $O_L$ is the operator 0, and for i=L-1 down to i=1 the input operator $O_i$ is the calculated result of the immediately preceding step after truncation of all monomial terms having a length greater than a predetermined first threshold length; and

obtaining the approximation of the expectation value of the operator 0 by determining a trace of a product of a final operator $O_0$ which is the calculation result of the last step after truncation of all monomial terms having a length greater than the predetermined first threshold length and the initial state operator.

2. Method according to claim 1, wherein the computation of the approximation is carried out by a classical computer.

3. Method according to claim 1 or 2, wherein the finite dimensional quantum system is a Fermionic quantum system described in a basis of 2N linearly and algebraically independent Fermionic basis operators.

4. Method according to anyone of the preceding claims, wherein the initial state operator $\rho_{ini}$ is such that a trace of a product of one of the monomials and the initial state operator can be calculated for any monomial of the set of monomials on the classical computer in a time and by use of memory that scales polynomially in the number of basis operators of the set of basis operators.

5. Method according to anyone of the preceding claims, wherein at least one of the quantum operations is represented by a linear combination of the monomials.

6. Method according to anyone of the preceding claims, wherein at least one quantum operation is a unitary operation.

7. Method according to anyone of the preceding claims, wherein the method further comprises truncating all monomials in the representation of the quantum operations and/or in the representation of the operator having a length greater than a predetermined second threshold length.

8. Method according to anyone of the preceding claims, wherein the operator is a Hermitian operator.

9. Method according to anyone of the preceding claims, wherein the method further comprises determining a final sequence of quantum operations by starting from an initial sequence of quantum operations as an input of an iteration, wherein in each iteration step the expectation value of the operator $O$ is approximately computed according to anyone of the preceding claims, and the sequence of quantum operations of the next iteration step is determined on the basis of the expectation value of the operator calculated in the preceding iteration step.

10. Method according to claim 9, wherein the method further comprises:

providing a representation of the final sequence of quantum operations and the initial state operator to a quantum computer comprising a plurality of quantum mechanical particles and means to apply quantum operations thereto;
preparing, by the quantum computer, the quantum mechanical particles in the initial quantum state;
applying, by the quantum computer, the sequence of quantum operations to the initial state to thereby obtain a final state of the plurality of quantum mechanical particles.

11. Method according to claim 10, wherein the plurality of quantum mechanical particles is a plurality of qubits, and the method further comprises mapping the initial state operator and the sequence of quantum operations to a qubit representation, and wherein the representation of the sequence of quantum operations and the representation of the initial state operator provided to the quantum computer are the respective qubit representations.

12. Computing system comprising a classical computer and a quantum computer with a plurality of quantum mechanical particles and means to apply quantum operations thereto, wherein the classical computer is configured to carry out the method according to claim 9 to thereby determine the final sequence of quantum operations, and wherein the quantum computer is configured to receive the final sequence of quantum operations and the initial state operator, to prepare the quantum mechanical particles in the initial quantum state and to calculate a final state of the quantum mechanical particles by applying the sequence of quantum operations to the initial state.

13. Computer program product comprising instructions which, when the computer program product is carried out by a classical computer, cause the classical computer to carry out the method according to anyone of claims 1 - 9.

**14.** Data carrier having stored thereon the computer program product according to claim 13.

Fig. 1

Fig. 2a

Fig. 2b

Fig. 3a

Fig. 36

Fig. 3c

Europäisches
Patentamt

European
Patent Office

Office européen
des brevets

# EUROPEAN SEARCH REPORT

**Application Number**

EP 24 20 6425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Angrisani Armando ET AL: "Classically estimating observables of noiseless quantum circuits", , 4 September 2024 (2024-09-04), pages 1-35, XP093260798, Retrieved from the Internet: URL:https://arxiv.org/pdf/2409.01706 [retrieved on 2025-03-18] * abstract; Sections I-VII; figure 1 * | 1-14 | INV. G06N10/20 G06N10/60 G06N10/80 |
| A | MANUEL S RUDOLPH ET AL: "Classical surrogate simulation of quantum systems with LOWESA", ARXIV.ORG, CORNELL UNIVERSITY LIBRARY, 201 OLIN LIBRARY CORNELL UNIVERSITY ITHACA, NY 14853, 17 August 2023 (2023-08-17), XP091595024, * abstract; Sections I-V; Appendix A; figure 1 * | 1-14 | |
| A,D | AARON MILLER ET AL: "Treespilation: Architecture- and State-Optimised Fermion-to-Qubit Mappings", ARXIV.ORG, CORNELL UNIVERSITY LIBRARY, 201 OLIN LIBRARY CORNELL UNIVERSITY ITHACA, NY 14853, 8 March 2024 (2024-03-08), XP091693755, * abstract; Sections I-VI; figures 1-3 * | 1-14 | **TECHNICAL FIELDS SEARCHED (IPC)** G06N |

The present search report has been drawn up for all claims

| Place of search | Date of completion of the search | Examiner |
|---|---|---|
| The Hague | 20 March 2025 | Klasen, TJ |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MILLER, A.** ; **ZIMBORÁS, Z.** ; **KNECHT, S** ; **MANISCALCO, S** ; **GARCÍA-PÉREZ, G**. Bonsai algorithm: Grow your own fermion-to-qubit mappings.. *PRX Quantum*, 2023, vol. 4 (3), 030314
- **MILLER, A.** ; **GLOS, A.** ; **ZIMBORÁS, Z**. Treespilation: Architecture-and State-Optimised Fermion-to-Qubit Mappings.. *arXiv preprint arXiv:2403.03992*, 2024
- **KIM, Y** ; **FDDINS, A** ; **ANAND, S** ; **WEI, K.X** ; **VAN DEN BERG, E** ; **ROSENBLATT, S.** ; **NAYFEH, H.** ; **WU, Y** ; **ZALETEL, M.** ; **TEMME, K**. Evidence for the utility of quantum computing before fault tolerance. *Nature*, 2023, vol. 618 (7965), 500-505
- **ANGRISANI, A.** ; **SCHMIDHUBER, A.** ; **RUDOLPH, M.S.** ; **CEREZO, M.** ; **HOLMES, Z.** ; **HUANG, H.Y.** Classically estimating observables of noiseless quantum circuits. a. *rXiv preprint arXiv:2409.01706*, 2024